# FASCICULE DE BREVET EUROPEEN

(11) **EP 0 876 234 B1**
(45) Date de publication et mention de la délivrance du brevet: **03.11.1999**
(21) Numéro de dépôt: 97901657.3
(22) Date de dépôt: 23.01.1997
(51) Int. Cl.: B23B 5/40

(54) **TOUR A TROIS AXES ET CINEMATIQUE POLAIRE**
DREHMASCHINE MIT DREI ACHSEN UND POLAIRE KINEMATIK
TRIAXIAL LATHE USING POLAR MOVEMENTS

(30) Priorité: 25.01.1996 FR 9600849
(43) Date de publication de la demande: 11.11.1998
(73) Titulaire: COMMISSARIAT A L'ENERGIE ATOMIQUE, 75015 Paris Cédex 15 (FR)
(72) Inventeur: DEMESY, Michel, F-21121 Fontaine-lès-Dijon (FR); COLLARD, Eric, F-75013 Paris (FR); VACHETTE, Jean-Marie, F-60100 Creil (FR)
(74) Mandataire: Poulin, Gérard
(86) Numéro de dépôt international: FR9700132
(87) Numéro de publication internationale: WO9727017

(56) Documents cités:
- DE-C- 3 692
- FR-A- 1 383 831
- PATENT ABSTRACTS OF JAPAN vol. 8, no. 146 (M-307) [1583] , 7 Juillet 1984 & JP 59 042203 A (KOGYO GIJUTSUIN), 8 Mars 1984,

## Description

### Domaine de l'invention

L'invention concerne un tour d'usinage selon le preambule de la revendication 1 et comme connu par example par le document DE-C-3692. Un tour de ce type est utilisée dans l'usinage par enlèvement de matière de pièces montées tournantes sur une broche de machine-outil, et en particulier le tournage en cinématique polaire, c'est-à-dire avec lequel des surfaces sphériques, asphériques, peuvent être obtenues.

### Art antérieur et problème posé

Dans le domaine de l'usinage de pièces métalliques ou non métalliques, à haute ou moyenne précision, il est connu d'usiner des pièces par tournage au moyen de tours, tours parallèles, à commande numérique, à décolleter, etc. Les tours traditionnels possèdent, de manière générale, une broche tournante autour d'un axe horizontal et dans le mandrin de laquelle est fixée la pièce à usiner. Sur le même bâti, est monté coulissant, de manière longitudinale et horizontale, un traînard supportant une tourelle porte-outil, dont l'outil peut se déplacer selon deux directions perpendiculaire et horizontale pour pouvoir usiner différentes faces de la pièce à obtenir.

On connaît également des tours spécialement conçus pour usiner des surfaces sphériques et comprenant un plateau tournant porte-outil placé au-dessus de la broche, permettant ainsi à l'outil de décrire un arc de cercle engendrant, par la rotation de la pièce à usiner, une sphère sur celle-ci.

D'autre part, il est toutefois possible d'usiner une sphère, ou une surface asphérique, sur un tour parallèle normal ou conventionnel, en agissant sur le déplacement combiné du traînard et de la tête porte-outil, de manière à générer l'arc de cercle équivalent et nécessaire pour façonner une surface sphérique sur la pièce tournant sur l'axe de la broche. De plus, la précision des cotes et l'état de la surface à obtenir sont tributaires de l'arête coupante de l'outil utilisé. Or, lors d'un déplacement combiné du traînard, appelé également "chariot porte-outil", et de la tourelle porte-outil, plusieurs points différents de l'arête coupante sont utilisés pour usïner une surface sphérique. En d'autres termes, lors du déplacement combiné de ces deux éléments de l'ensemble porte-outil, l'outil coupant et son arête coupante gardent la même orientation par rapport à la pièce à usiner, alors que la surface à usiner change d'orientation en s'inclinant de 90° correspondant aux 90° de l'arc de cercle décrit par l'outil. De ce fait, l'arête coupante utilisée décrit un arc de cercle ou une courbe et différents points de cette arête coupante sont utilisés. La surface usinée est donc tributaire de la position géométrique de ces différents points et de leur efficacité de coupe.

Pour remédier à cet inconvénient, il est possible de procéder à une rotation complémentaire de l'outil par rapport au traînard autour d'un axe vertical, cette rotation devant être évidemment combinée et coordonnée avec les deux déplacements longitudinal du traînard et transversal du porte-outil, de manière très précise. Ceci entraîne l'utilisation de moyens supplémentaires que ne possèdent pas souvent les tours conventionnels. De plus, ces trois mouvements étant combinés en même temps, la précision de la surface obtenue peut être plus aléatoire, du fait que les fourchettes d'incertitude sur chacun des trois déplacements s'ajoutent. La fourchette de tolérance de la pièce obtenue est alors bien souvent trop importante.

Le but de l'invention est de proposer une conception de tours relativement simple permettant d'usiner des surfaces sphériques, asphériques, coniques, avec toutefois une précision équivalant aux précisions obtenues pour des usinages simples avec des tours conventionnels.

### Résumé de l'invention

A cet effet, l'objet principal de l'invention est un tour comprenant :
- un bâti ;
- une broche montée tournante sur le bâti, selon un axe horizontal déterminé, pour entraîner en rotation une pièce à usiner ; et
- un ensemble porte-outil monté sur le bâti pour usiner la pièce fixée sur la broche.

Selon l'invention le tour est du type à trois axes cinématiques asservis constitués par :
- la broche montée coulissante par rapport à l'axe longitudinal de cette même broche ;
- l'ensemble porte-outil monté tournant par rapport à un axe vertical sécant avec l'axe longitudinal de la broche, par un plateau tournant situé en dessous de l'axe horizontal de la broche ; et
- l'ensemble porte-outil comportant un chariot porte-outil monté coulissant sur le plateau tournant par rapport à un deuxième axe perpendiculaire à l'axe vertical de rotation.

Comme dans les tours conventionnels, l'outil peut être réglable en hauteur, de même qu'en translation longitudinale et parallèle à l'axe de la broche.

### Description détaillée d'une réalisation de l'invention

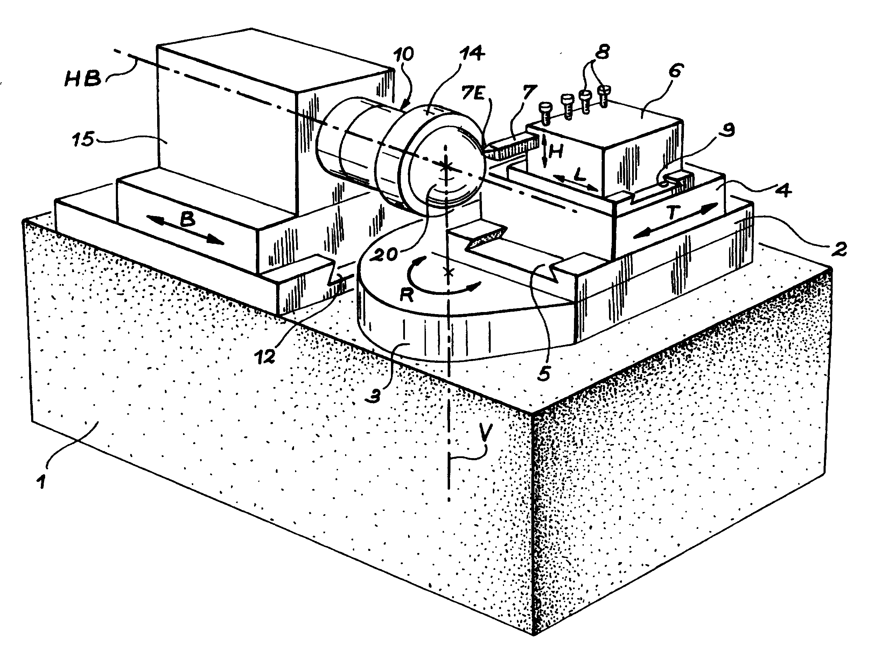

L'invention et ses différentes caractéristiques techniques seront mieux comprises à la lecture de la description suivante, accompagnée d'une figure unique représentant, en vue cavalière, le tour selon l'invention.

Le tour selon l'invention est représenté sur la figure de manière schématique. Les parties principales sont un bâti 1, représenté parallélépipédique, une broche 10 montée tournante sur le bâti 1 autour d'un axe horizontal HB et un ensemble porte-outil 2 monté sur le bâti 1. Comme dans les tours conventionnels, la pièce à usiner 20 est fixée dans un mandrin 14 placé à l'extrémité de la broche 10. L'usinage est effectué par un outil coupant 7 fixé dans une tourelle porte-outil 6 au moyen de vis de fixation 8, de manière conventionnelle. La tourelle porte-outil 6 se trouve sur le côté de la broche 10, de manière à ce que l'outil 7 soit à peu près à la hauteur de l'axe HB horizontal de la broche 10.

Le tour selon l'invention se distingue des tours traditionnels, c'est-à-dire des tours parallèles ou horizontaux, révolvers ou à décolleter, par les différents mouvements relatifs des principaux ensembles du tour les uns par rapport aux autres et asservis.

Une caractéristique principale et primordiale du tour selon l'invention est que l'ensemble porte-outil 2 est monté tournant autour d'un axe vertical V qui coupe l'axe horizontal de la broche HB. En conséquence, comme le montre la double flèche courbée R, l'ensemble porte-outil 2 et notamment la tourelle porte-outil 6 et l'outil 7 peuvent effectuer des rotations autour de cet axe vertical V, c'est-à-dire autour de la pièce 20 à usiner si celle-ci est placée au-dessus de cet axe vertical V. On peut ainsi faire décrire à l'extrémité 7E de l'outil 7 un arc de cercle autour de l'axe vertical V et usiner, de par la rotation de la pièce 20 autour de l'axe horizontal HB, une sphère, telle qu'elle est représentée sur la figure.

On comprend que, par cette rotation autour de l'axe vertical V qui coupe l'axe horizontal HB de la broche 10, l'extrémité 7E de l'outil 7 présente, face à la pièce 20, toujours la même position relative et effectue l'usinage, c'est-à-dire la coupe par enlèvement de copeaux de la pièce 20, avec toujours le même point de l'arête coupante, à quelques micromètres près.

On comprend ainsi que, grâce à un seul mouvement relatif de l'ensemble porte-outil 2 par rapport au bâti 1 et par rapport à la pièce à usiner 20, qui en outre tourne autour de l'axe horizontal HB, on évite l'emploi combiné de deux translations perpendiculaires l'une par rapport à l'autre de l'outil 7, comme il est pratiqué avec les tours traditionnels. La précision de la surface sphérique obtenue sur la pièce 20 est alors simplement tributaire de l'efficacité du point d'usinage de l'arête coupante de l'extrémité 7E de l'outil 7 et de la précision de la rotation de l'ensemble porte-outil 2 autour de l'axe vertical V. A cet effet, on peut signaler que cette rotation peut être obtenue au moyen d'une colonne pivotante ayant une portée d'au moins 300 millimètres et utilisant des roulements et butées à billes.

On note que la rotation de l'ensemble porte-outil 2 par rapport au bâti 1 se fait à un niveau inférieur à celui de l'axe horizontal HB de la broche 10. En d'autres termes, l'ensemble porte-outil 2 possède un plateau tournant 3 constituant la base de celui-ci et étant directement posé sur le bâti 1. Le plan dans lequel s'effectue ce déplacement de la surface inférieure du plateau tournant 3 sur le bâti 1 est donc placé bien en dessous de l'axe horizontal HB de la broche 10.

Sur ce plateau tournant 3 est fixée une première glissière 5, par exemple en queue d'aronde, dans laquelle coulisse un chariot porte-outil 4. Cette translation par coulissement s'effectue dans une direction T plutôt transversale perpendiculaire à l'axe vertical V autour duquel s'effectue la rotation de l'ensemble porte-outil 2. De la sorte, la tourelle porte-outil 6 et son outil 7 peuvent être rapprochés ou éloignés de l'axe horizontal HB de la broche 10 et, en conséquence, de la pièce à usiner 20.

De manière conventionnelle, la tourelle porte-outil 6 peut être équipée elle aussi de possibilité de translation par rapport au chariot porte-outil 4. A cet effet, on a représenté une glissière 9 sur la partie supérieure du chariot porte-outil 4 et dans laquelle peut coulisser la tourelle porte-outil 6. Cette translation est perpendiculaire à la translation du chariot porte-outil 4. En d'autres termes, cette deuxième translation se fait selon une direction horizontale et perpendiculaire à la direction horizontale T de déplacement du chariot porte-outil 4.

Il est également préférable d'équiper la tourelle porte-outil 6 de moyens de réglage en hauteur de l'outil 7, comme le suggère le petite flèche verticale H à droite de l'outil 7. Ces moyens n'ont pas été représentés, car ils peuvent être constitués d'outillages conventionnels. Ainsi, le positionnement de l'arête coupante de l'extrémité 7E de l'outil 7 peut être réglé de manière précise par rapport à la pièce à usiner 20.

Une autre caractéristique importante de l'invention est le fait que la broche 10, outre le fait qu'elle est montée tournante autour de l'axe horizontal HB, est équipée de moyens de translation dans une direction horizontale B et parallèle à cet axe HB de la broche 10. En effet, le carter 15 de la broche 20 est monté coulissant par un chariot de broche 11 qui coulisse lui-même dans une troisième glissière 12 fixée sur le bâti 1. Il est ainsi possible d'avancer ou de reculer la broche 10, c'est-à-dire la pièce à usiner 20 par rapport à l'outil 7, le long de l'axe longitudinal horizontal HB de la broche et de régler la position longitudinale de cette pièce à usiner 20 par rapport à l'outil 7.

On comprend qu'avec le tour selon l'invention et ses trois axes asservis, il est possible de travailler de différentes manières.

Une première manière consiste à utiliser un déplacement en translation longitudinale, symbolisé par la flèche parallèle B à l'axe HB de la broche, pour usiner des cylindres, c'est-à-dire effectuer les cylindrages.

Une deuxième possibilité consiste à utiliser un mouvement de translation transversale parallèle à la direction de déplacement T du chariot porte-outil 4 pour dresser des surfaces, c'est-à-dire usiner des dressages de faces.

Une troisième possibilité est d'utiliser la rotation R autour de l'axe vertical de rotation de l'ensemble porte-outil 2 pour usiner des profils sphériques.

Une quatrième possibilité est d'utiliser en combinaison de deux mouvements de translation selon les directions B et T, lorsque la direction T de déplacement du chariot porte-outil 4 est perpendiculaire par rapport à la direction B de l'axe de la broche HB, pour réaliser des surfaces coniques.

Une cinquième possibilité est d'utiliser ces deux mouvements de translation B de la broche et T du chariot porte-outil 4 en combinaison avec la rotation R autour de l'axe vertical V pour usiner des profils asphériques.

Il est donc possible d'adapter la cinématique du tour selon l'invention en fonction de la surface à usiner.

Pour toutes ces possibilités d'usinage avec le tour selon l'invention, l'usinage s'effectue avec un seul point de l'arête coupante de l'outil, c'est-à-dire par un travail du type "single point". Ceci apporte un avantage de ne pas entacher la qualité géométrique des profils usinés par d'éventuelles imperfections de la l'arête coupante de l'outil dues à un affûtage plus ou moins aléatoire de celle-ci.

On note que les deux mouvements de translation B et T peuvent être réalisés par des technologies de glissement tout à fait traditionnelles et précises.

## Revendications

1. Tour d'usinage comprenant :
- un bâti (1) ;
- une broche (10) montée tournante par rapport au bâti (l) le long d'un axe horizontal déterminé (HB) pour entraîner en rotation une pièce à usiner (20) ; et
- un ensemble porte-outil (2) monté sur le bâti (1) pour usiner la pièce à usiner (20) montée dans la broche (10),
- l'ensemble porte-outil (2) étant monté tournant par un plateau tournant (3) autour d'un axe vertical (V) sécant avec l'axe horizontal (HB) de la broche (10)
caractérisé en ce qu'il est du type à trois axes cinématiques asservis qui sont constitués par:
- la broche (10) montée coulissante selon une direction horizontale (B), parallèle à l'axe horizontal (HB) de cette même broche (10); et
- l'ensemble porte-outil (2) comportant un chariot porte-outil (4) monté coulissant sur le plateau tournant (3) selon une direction horizontale (T) qui est sécante avec la direction horizontale de la broche (10).

2. Tour selon la revendication 1, caractérisé en ce que l'ensemble porte-outil (2) possède une tourelle porte-outil (6) réglable en hauteur.

3. Tour selon la revendication 1, caractérisé en ce que l'ensemble porte-outil (2) est monté réglable en translation dans une direction horizontale (L) perpendiculaire au mouvement de translation (T) du chariot porte-outil (4).

## Claims

1. Machining lathe comprising:
- a base (1);
- a spindle (10) mounted to rotate in relation to base (1) along a determined horizontal axis (HB) to drive a part to be machined (20) in rotation, and
- a tool-holder assembly (2) mounted on base (1) to machine the part to be machined (20) mounted on the spindle (10),
- the tool-holder assembly (2) being mounted to rotate using a rotating plate (3) around a vertical axis (V) that intersects with horizontal axis (HB) of the spindle (10),
characterized in that it has three servocontrolled kinematics axes comprising:
- the spindle (10) mounted to slide in a horizontal direction (B), parallel to the horizontal axis (HB) of the said spindle (10) and
- the tool-holder assembly (2) comprising a tool-holder carriage (4) mounted to slide on the rotating plate (3) in a horizontal direction (T) which is intersected with the horizontal direction of spindle (10).

2. Lathe according to claim 1, characterized in that the tool-holder assembly (2) comprises a height-adjustable turret head tool-holder (6).

3. Lathe according to claim 1, characterized in that the tool-holder assembly (2) is mounted to be translationally adjusted in a horizontal direction (L) perpendicular to the translation movement (T) of the tool-holder carriage (4).

## Patentansprüche

1. Drehmaschine, umfassend:
- ein Bett (1);
- eine Spindel (10), drehbar montiert bezüglich des Betts (1) längs einer bestimmten Achse (HB), um ein zu bearbeitendes Stück (20) anzutreiben; und
- eine auf das Bett (1) montierte Werkzeughaltergruppe (2), um das auf die Spindel (10) montierte, zu bearbeitende Stück (20) zu bearbeiten;
- wobei die Werkzeughaltergruppe (2) mittels einer Drehplatte (3) drehbar um eine vertikale Achse (V) montiert ist, die sich mit der horizontalen Achse (HB) der Spindel (10) schneidet;
dadurch gekennzeichnet,
daß, sie drei kinematisch gesteuerte Achsen umfaßt, die gebildet werden durch:
- die in einer horizontalen Richtung (B) gleitend montierte Spindel (10), parallel zur horizontalen Achse (HB) eben dieser Spindel (10);
- die Werkzeughaltergruppe (2) mit einem Werkzeughalter (4), gleitend auf die Drehplatte (3) montiert, in einer horizontalen Richtung (T), die die horizontale Richtung der Spindel (10) schneidet.

2. Drehmaschine nach Anspruch 1, dadurch gekennzeichnet, daß die Werkzeughaltergruppe (2) einen höhensteuerbaren Werkzeughalterkopf (6) umfaßt.

3. Drehmaschine nach Anspruch 1, dadurch gekennzeichnet, daß die Translationsbewegung der Werkzeughaltergruppe (2) in einer horizontalen Richtung (L), senkrecht zur Translationsbewegung (T) des Werkzeughalterschlittens (4), steuerbar ist.
